# EUROPEAN PATENT SPECIFICATION

(11) **EP 3 069 838 B1**
(45) Date of publication and mention of the grant of the patent: **29.12.2021**
(21) Application number: 16161271.8
(22) Date of filing: 18.03.2016
(51) Int. Cl.: B27M 1/08, B23Q 7/04, B23Q 7/00, B23Q 1/01, B23D 47/04, B27B 31/00, B27B 5/065

(54) **MACHINE TO PROCESS PANELS OF WOOD OR THE LIKE**
MASCHINE ZUR VERARBEITUNG VON PANEELEN AUS HOLZ UND DERGLEICHEN
MACHINE POUR USINAGE DE PANNEAUX EN BOIS OU ANALOGUE

(30) Priority: 18.03.2015 IT BO20150133
(43) Date of publication of application: 21.09.2016
(73) Proprietor: BIESSE S.p.A., 61122 Pesaro (IT)
(72) Inventor: TORRACA, Roberto, 61100 PESARO (IT)
(74) Representative: Manconi, Stefano

(56) References cited:
- EP-A1- 2 110 350
- WO-A1-99/20441
- WO-A1-2007/113673
- WO-A1-2014/106868

## Description

The present invention relates to a machine to process panels of wood or the like, according to the preamble of claim 1. Such a machine is known from the document WO 2007/113673 A1.

In particular, the present invention relates to a machine to process panels of wood or the like comprising an elongated base, which extends in a first direction, has a support surface for at least one panel, and defines a processing station for the panels; and an overhead crane, which extends above the base in a second direction that is transverse to the first direction, is mobile along the base in the first direction, and is provided with at least one operating head to process the panels.

The machine has, furthermore, a loading station to load the panels to be processed and a discharging station to discharge the panels that have just been processed, which are arranged on opposite sides of the processing station in the first direction.

The loading station usually is provided with a lifting platform, which is designed to receive and support a stack of panels on top of one another, and is mobile in a third direction that is orthogonal to the aforesaid first and second directions and to the support surface.

The discharging station is provided with a belt conveyor having a transport branch, which is substantially coplanar to the support surface.

The overhead crane comprises at least one pushing member, which extends in the second direction so as to transfer the panels that have just been processed from the processing station to the discharging station, and at least two holding and transporting members, which are distributed along the overhead crane in the second direction, and are defined by respective suction cups, which are designed to transfer the upper panel of the stack of panels from the loading station to the processing station.

Since the suction cups can only transfer one panel at a time from the loading station to the processing station, known panel processing machines described above are affected by some drawbacks that are mainly due to the fact that the simultaneous processing of different panels arranged on top of one another leads to a corresponding number of transfers of panels from the loading station to the processing station, which makes the production cycle of these machines relatively long and complicated.

It is an object of the present invention to provide a machine to process panels of wood or the like, which is designed to eliminate the aforementioned drawbacks in a straightforward, relatively low-cost manner.

According to the present invention, there is provided a machine to process panels of wood or the like according to the appended claims.

The present invention will now be described with reference to the accompanying drawings, showing a nonlimiting embodiment thereof, wherein:
figure 1 is a schematic side view, with parts removed for greater clarity, of a preferred embodiment of the machine according to the present invention;
figure 2 is a schematic perspective view, with parts removed for greater clarity, of a detail of the machine of figure 1;
figure 3 is a schematic side view, with parts removed for greater clarity, of a first detail of figure 2;
figure 4 is a schematic side view, with parts removed for greater clarity, of a second detail of figure 2;
figure 5 is a perspective view of a third detail of figure 2;
figures 6a and 6b are two side views of the detail of figure 5 shown in two different operating positions; and
figures 7a and 7b are two side views showing the operating principle of the detail of figure 5.

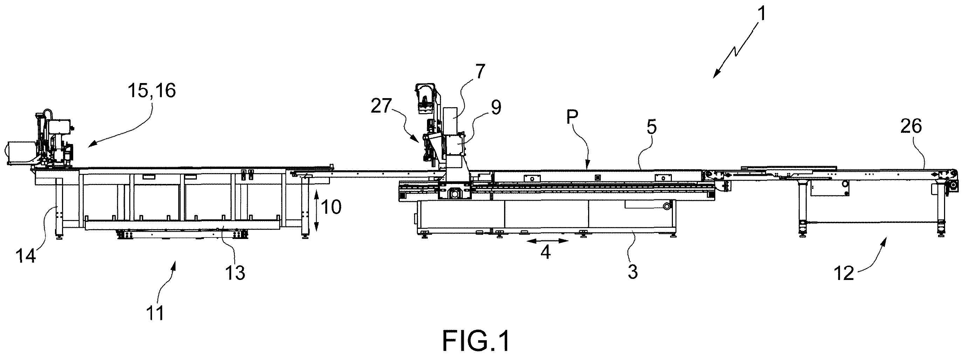

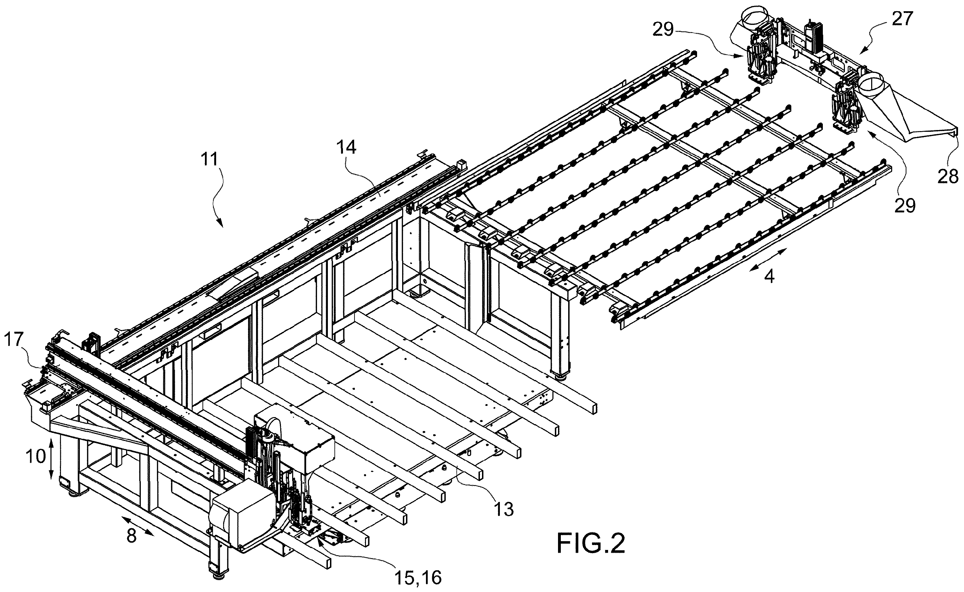

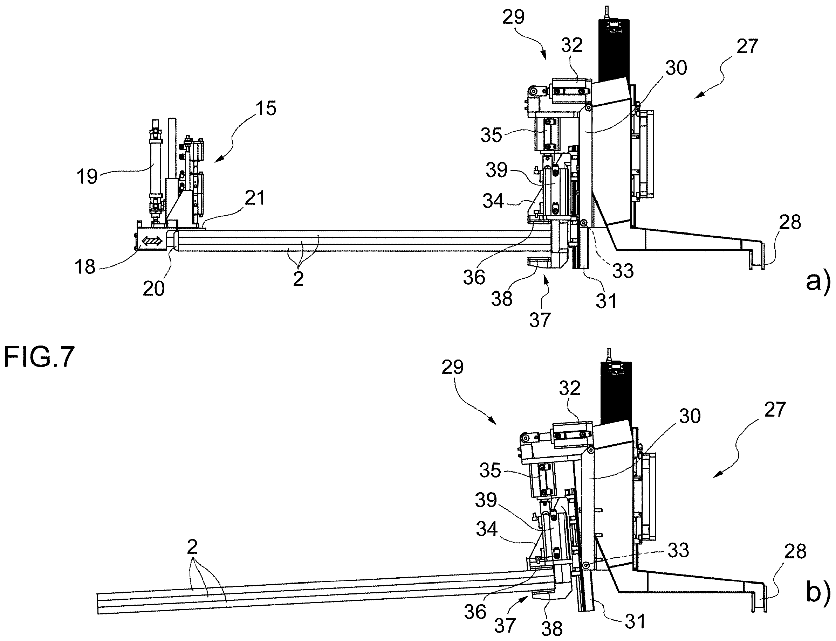

With reference to figures 1 and 2, number 1 indicates, as a whole, a machine to process wood panels 2 or the like (figure 7) with a substantially rectangular shape.

The machine 1 comprises a base 3 with an elongated shape, which extends in a horizontal direction 4, has an upper support surface P defined by a panel 5 commonly known as "slave panel", and defines a processing station 6 for the panels 2.

The base 3 is engaged in a sliding manner by an overhead crane 7, which extends above the base 3 in a horizontal direction 8 that is transverse to the direction 4, is mobile along the base 3 in the direction 4, and supports at least one operating head 9 for cutting and/or drilling the panels 2.

The head 9 is coupled to the overhead crane 7 in a sliding manner so as to move, relative to the overhead crane 7, in the direction 8 and in a vertical direction 10 that is orthogonal to the directions 4 and 8 and to the surface P.

The machine 1 comprises, furthermore, a loading station 11 to load the panels 2 to be processed and a discharging station 12 to discharge the panels 2 that have just been processed, which are arranged on opposite sides of the station 6 in the direction 4.

The station 11 has a lifting platform 13, which is mounted inside a frame 14 of the station 11, is configured to receive and support a stack of panels 2 arranged on top of one another, and is mobile in the direction 10 so as to move the panels 2 above the surface P.

According to the invention, the station 11 is provided with a first nearing device 15 to correctly position the panels 2 in the direction 4 and with a second nearing device 16 to correctly position the panels 2 in the direction 8.

The device 15 comprises a horizontal slide defined by a crosspiece 17, which extends above the platform 13 in the direction 8, and is coupled to the frame 14 in a sliding manner so as to make straight movements along the frame 14 in the direction 4.

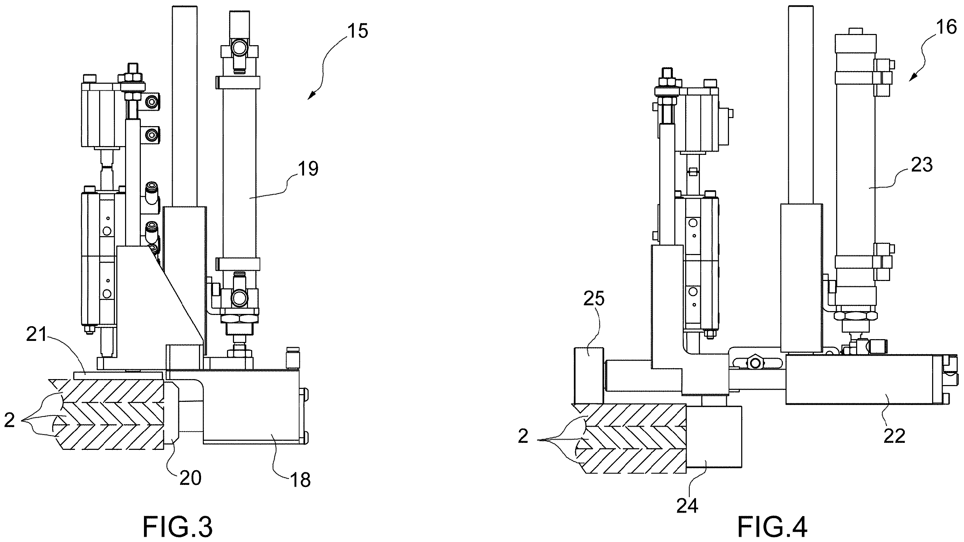

According to figure 3, the crosspiece 17 supports a vertical slide 18, which is coupled to the crosspiece 17 in a sliding manner so as to make, relative to the crosspiece 17 and due to the thrust of an actuator cylinder 19, straight movements in the direction 10 between a raised rest position and a lowered operating position.

The device 15 comprises, furthermore, a pushing plate 20, which is fixed to the slide 18 and is designed to engage the panels 2 in the area of a lateral edge of theirs that is perpendicular to the direction 4; and a vertical copy attachment 21, which is designed, according to the invention to come into contact with a larger face of the upper panel 2 following a movement of the slide 18 to its lowered operating position.

Since the copy attachment 21 is coupled to the slide 18 in a sliding manner so as to move in the direction 10, the position of the copy attachment 21 relative to the plate 20 is selectively controlled as a function of the number of panels 2 to be transferred from the station 11 to the station 6.

With reference to figure 4, the device 16 comprises a vertical slide 22, which is coupled to the crosspiece 17 in a sliding manner so as to make, relative to the crosspiece 17 and due to the thrust of an actuator cylinder 23, straight movements in the direction 10 between a raised rest position and a lowered operating position.

The device 16 comprises, furthermore, a pushing roller 24, which is fixed to the slide 22 and is designed to engage the panels 2 in the area of a lateral edge of theirs that is perpendicular to the direction 8; and a copy attachment roller 25, which is designed to come into contact with a larger face of the upper panel 2 following a movement of the slide 22 to its lowered operating position.

Since the roller 25 is coupled to the slide 22 in a sliding manner so as to move in the direction 10, the position of the roller 25 relative to the roller 24 in the direction 10 is selectively controlled as a function of the number of panels 2 to be transferred from the station 11 to the station 6.

According to figure 1, the station 12 is provided with a belt conveyor 26 having an upper transport branch, which is substantially coplanar to the surface P.

With reference to figures 2 and 7, the overhead crane 7 has, furthermore, a transfer unit 27 to transfer the panels 2 in the direction 4 from the station 11 to the station 6 and from the station 6 to the station 12.

The unit 27 comprises a pushing rod 28, which extends above the base 3 in the direction 8, faces the station 12, and is coupled to the overhead crane 7 so as to make, relative to the overhead crane 7, straight movements in the direction 10 between a raised rest position and a lowered operating position.

Once it is arranged in its lowered operating position, the rod 28 is fed in the direction 4 by the overhead crane 7 so as to engage the panels 2 placed in the station 6 and move them from the panel 5 to the conveyor 26, i.e. from the station 6 to the station 12.

The unit 27 further comprises, in this specific case, two holding and transporting members 29, which, in particular, are mounted on the rod 28, face the station 11, and are distributed along the rod 28 in the direction 8.

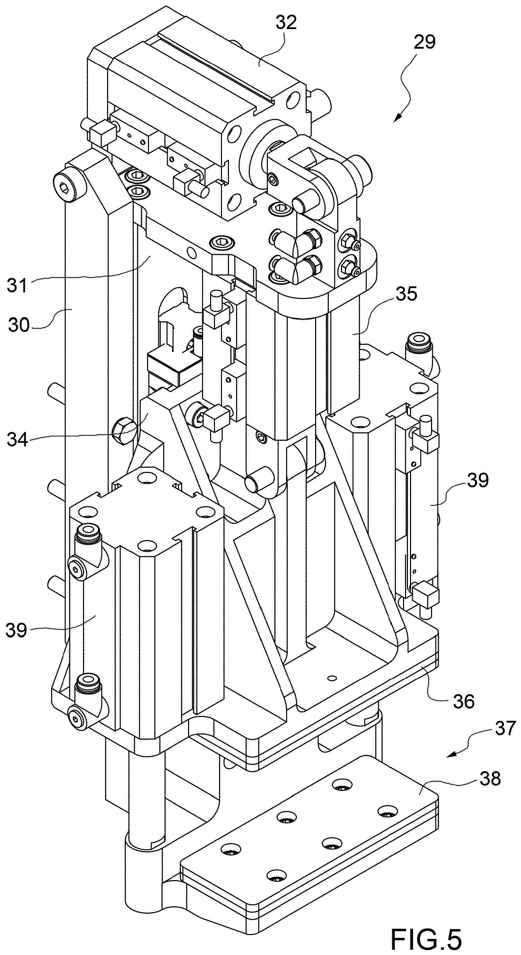

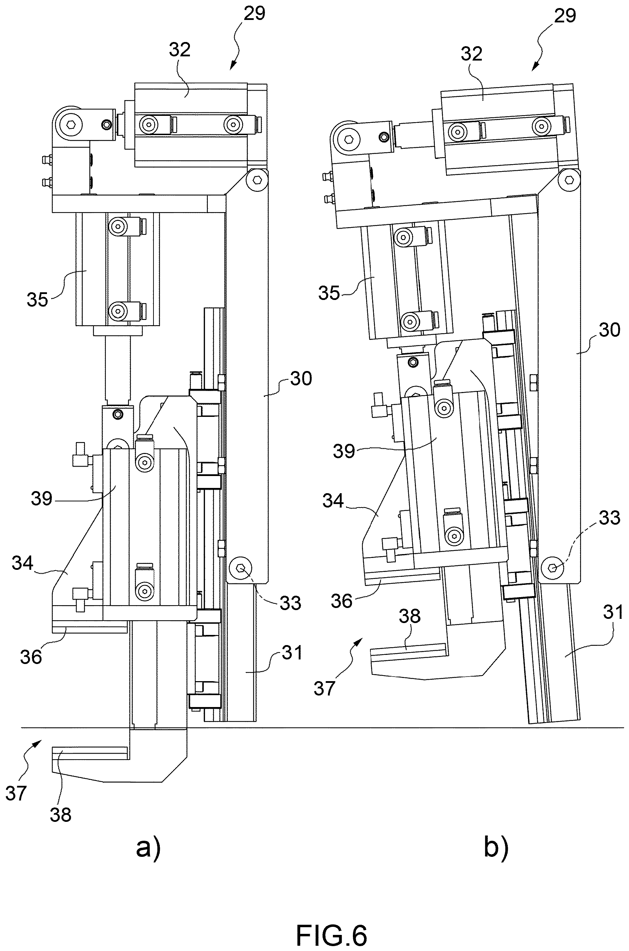

According to figures 5 and 6, each member 29 comprises a support bracket 30, which is fixed to the rod 28; a crank 31, which is coupled to the bracket 30 in a rotary manner so as to rotate, relative to the bracket 30 and due to the thrust of an actuator cylinder 32, around a fulcrum axis 33 that is parallel to the direction 8; and a slide 34, which is coupled to the crank 31 in a sliding manner so as to move along the crank 31 due to the thrust of an actuator cylinder 35.

The slide 34 is designed so as to define an upper jaw 36 of a clamp 37 further comprising a lower jaw 38 coupled to the slide 34 in a sliding manner so as to move, due to the thrust of a pair of actuator cylinders 39, transversely to the axis 33 between a clamping position (figure 6b) and a release position (figure 6a) for at least one panel 2.

The clamp 37 is moved by the cylinder 32 around the axis 33 between a first operating position (figure 6a), in which the lying planes of the jaws 36, 38 are substantially horizontal and perpendicular to the direction 10, and a second operating position (figure 6b), in which the lying planes of the jaws 36, 38 are inclined relative to the surface P according to a given angle.

The operation of the machine 1 will now be described starting from an instant in which the position of the copy attachment 21 relative to the pushing plate 20 and the position of the copy attachment roller 25 relative to the pushing roller 24 have been selectively adjusted as a function of the number of panels 2 to be transferred from the loading station 11 to the processing station 6.

The crosspiece 17 is moved along the frame 14 in the direction 4 so as to allow the roller 24 to roll along the panels 2 and correctly position them in the direction 8 against a limit stop striker obtained in the frame 14 and so as to allow the plate 20 to move, in the direction 4 and relative to the remaining panels 2, the panels 2 that must be transferred from the station 11 to the station 6.

After having been correctly positioned in the station 11, the panels 2 to be transferred are grabbed by the clamps 37, which are both raised and rotated around the relative axes 33, so as to allow the clamps 37 to move above the panel 5 and, at the same time, correctly hold the panels 2.

Subsequently, the overhead crane 7 is moved along the base 3 in the direction 4 and the panels 2 are transferred from the station 11 to the station 6.

When they reach the station 6, the panels 2 are released on the panel 5 by opening the jaws 38 and lowering the clamps 37.

Once the processing carried out by the operating head 9 has ended, the pushing rod 28 is firstly lowered in the direction 10 and then moved by the overhead crane 7 in the direction 4 so as to transfer the panels 2 that have just been processed from the station 6 to the discharging station 12.

According to some embodiments that are not shown:
the holding and transporting members 29 are mobile in the direction 10 independently of one another; and
the holding and transporting members 29 are directly mounted on the overhead crane 7.

Therefore, in case of simultaneous processing of different panels 2, the clamps 37 allow all the panels 2 to be transferred during one single operating cycle of the transfer unit 27.

## Claims

1. A machine to process panels (2) of wood or the like comprising an elongated base (3), which extends in a first direction (4), has a support surface (P) for at least one panel (2), and defines a processing station (6) for the panels (2); an overhead crane (7), which extends above the base (3) in a second direction (8) that is transverse to the first direction (4), is mobile along the base (3) in the first direction (4), and is provided with at least one operating head (9) for cutting and/or drilling the panels (2); a loading station (11) to load the panels (2) to be processed and a discharging station (12) to discharge the panels (2) that have just been processed, which are arranged on opposite sides of the processing station (6) in the first direction (4); the overhead crane (7) comprising at least two holding and transporting members (29), which are distributed along the overhead crane (7) in the second direction (8) so as to transfer the panels (2) to be processed from the loading station (11) to the processing station (6), and at least one pushing member (28) to transfer the panels (2) that have just been processed from the processing station (6) to the discharging station (12); wherein each holding and transporting member (29) is a clamp member comprising two jaws (36, 38), which are mobile between a clamping position and a release position for at least one panel (2); and **characterized in that** the loading station (11) is provided with a first nearing device (15) to move the panels (2) in the first direction (4) and with a second nearing device (16) to move the panels (2) in the second direction (8) and **in that** each nearing device (15, 16) comprises a pushing member (20, 24), which is configured to come into contact with a lateral edge of the panels (2) to be transferred from the loading station (11) to the processing station (6), and a copy attachment (21, 25), which is configured to come into contact with a larger face of an upper panel (2).

2. A machine according to claim 1, wherein the loading station (11) comprises a lifting platform (13), which is configured to receive and support a stack of panels (2) and is mobile in a third direction (10) that is orthogonal to said first and second directions (4, 8) and to the support surface (P).

3. A machine according to claim 1 or 2, wherein each holding and transporting member (29) is mobile in a third direction (10) that is orthogonal to said first and second directions (4, 8) and to the support surface (P).

4. A machine according to claim 3, wherein the holding and transporting members (29) are mobile in the third direction (10) in unison or independently of one another.

5. A machine according to any of the previous claims, wherein each holding and transporting member (29) is mobile around a relative rotation axis (33) that is substantially parallel to the second direction (8).

6. A machine according to any of the previous claims, wherein the holding and transporting members (29) are directly mounted on the overhead crane (7).

7. A machine according to any of the claims from 1 to 5, wherein the holding and transporting members (29) are mounted on the pushing member (28).

8. A machine according to claim 7, wherein the pushing member (28) is mobile, relative to the overhead crane (7), in a third direction (10) that is orthogonal to said first and second directions (4, 8) and to the support surface (P), and wherein each holding and transporting member (29) is mobile, relative to the pushing member (28), between a raised position and a lowered position and around a relative rotation axis (33) that is parallel to the second direction (8).

9. A machine according to any of the previous claims, wherein each nearing device (15, 16) is selectively mobile in a third direction (10) that is orthogonal to said first and second directions (4, 8) and to the support surface (P) as a function of the number of panels (2) to be moved in the processing station (6).

10. A machine according to any of the previous claims, wherein the pushing member (20, 24) and the copy attachment (21, 25) of each nearing device (15, 16) are mobile relative to one another in a third direction (10) that is orthogonal to said first and second directions (4, 8) and to the support surface (P) as a function of the number of panels (2) to be moved in the processing station (6) .

## Patentansprüche

1. Maschine zum Bearbeiten von Tafeln (2) aus Holz oder dergleichen, umfassend eine lange Basis (3), die sich in einer ersten Richtung (4) erstreckt, die eine Stützfläche (P) für wenigstens eine Tafel (2) aufweist und eine Bearbeitungsstation (6) für die Tafeln (2) bildet; einen Überkopfkran (7), der sich über der Basis (3) in einer zweiten Richtung (8) erstreckt, quer zur ersten Richtung (4), und entlang der Basis (3) in der ersten Richtung (4) verfahrbar ist, versehen mit wenigstens einem Arbeitskopf (9) zum Schneiden und/oder Bohren der Tafeln (2); eine Ladestation (11) zum Aufgeben der zu bearbeitenden Tafeln (2) sowie eine Abgabestation (12) zum Abgeben der gerade bearbeiteten Tafeln (2), die auf gegenüberliegenden Seiten der Bearbeitungsstation (6) in der ersten Richtung (4) angeordnet sind; der Überkopfkran (7) umfasst wenigstens zwei Halte- und Transporteinrichtungen (29), die entlang dem Überkopfkran (7) in der zweiten Richtung (8) verteilt sind, um die zu bearbeitenden Tafeln entlang der Aufgabestation (11) zur Bearbeitungsstation (6) zu verbringen, und wenigstens ein Schiebeelement (28) zum Überführen der gerade bearbeiteten Tafeln (2) von der Bearbeitungsstation (6) zur Abgabestation (12); jede Halte- und Transporteinrichtung (29) ist ein Klemmelement mit zwei Klauen (36, 38), die zwischen einer Klemmposition und einer Freigabeposition für wenigstens eine Tafel (2) bewegbar sind, **dadurch gekennzeichnet, dass** die Aufgabestation (11) mit einer ersten Positioniervorrichtung (15) versehen ist, um die Tafeln (2) in der ersten Richtung (4) zu bewegen, sowie mit einer zweiten Positioniervorrichtung (16), um die Tafeln (2) in der zweiten Richtung (8) zu bewegen, und das jede Positioniervorrichtung (15, 16) einen Schieber (20, 24) aufweist, der derart gestaltet ist, dass er mit einer Seitenkante der von der Aufgabestation (11) zur Bearbeitungsstation (6) zu überführenden Tafeln in Berührung gelangt, ferner mit einer Kopiereinrichtung (21, 25), die derart gestaltet ist, dass sie mit einer Großfläche einer oberen Tafel in Berührung gelangt.

2. Maschine nach Anspruch 1, **dadurch gekennzeichnet, dass** die Aufgabestation (11) eine Hubplattform (13) umfasst, die derart gestaltet ist, dass sie einen Stapel von Tafeln aufnimmt und trägt und in der dritten Richtung (10) rechtwinklig zu der ersten und der zweiten Richtung (4, 8) sowie zur Stützfläche (P) verläuft.

3. Maschine nach Anspruch 1 oder 2, **dadurch gekennzeichnet, dass** jede Halte- und Transporteinrichtung (29) in einer dritten Richtung (10) bewegbar ist, rechtwinklig zur ersten und zur zweiten Richtung (4, 8) sowie zur Stützfläche (P).

4. Maschine nach Anspruch 3, wobei die Halte- und Transporteinrichtungen (29) in der dritten Richtung (10) beweglich sind, gleichzeitig oder unabhängig voneinander.

5. Maschine nach einem der vorausgegangenen Ansprüche, **dadurch gekennzeichnet, dass** jede Halte- und Transporteinrichtung (29) um eine entsprechende Drehachse (33) herum beweglich ist, die im Wesentlichen parallel zur zweiten Richtung (8) verläuft.

6. Maschine nach einem der vorausgegangenen Ansprüche, wobei die Halte- und Transporteinrichtungen (29) unmittelbar am Überkopfkran (7) montiert sind.

7. Maschine nach einem der Ansprüche 1 bis 5, wobei die Halte- und Transporteinrichtungen (29) am Schieber (28) montiert sind.

8. Maschine nach Anspruch 7, wobei der Schieber (28) relativ zum Überkopfkran (7) in einer dritten Richtung (10) beweglich ist, die rechtwinklig zur ersten und zur zweiten Richtung (4, 8) verläuft, sowie zur Stützfläche (P), und wobei jede Halte- und Transporteinrichtung (29) relativ zum Schieber (28) beweglich ist, zwischen einer angehobenen und einer abgesenkten Position sowie um eine relative Drehachse (33), die parallel zur zweiten Richtung (8) verläuft.

9. Maschine nach einem der vorausgegangenen Ansprüche, wobei jede Positioniervorrichtung (15, 16) in einer dritten Richtung (10) selektiv beweglich ist, die rechtwinklig zur ersten und zweiten Richtung (4, 8) verläuft sowie zur Stützfläche (P), um die Anzahl von Tafeln (2) in die Bearbeitungsstation (6) zu verbringen.

10. Maschine nach einem der vorausgegangenen Ansprüche, wobei der Schieber (20, 24) sowie die Kopiereinrichtung (21, 25) einer jeden Positioniervorrichtung (15, 16) relativ zueinander in der dritten Richtung (10) beweglich sind, die rechtwinklig zur ersten und zweiten Richtung (4, 8) verläuft sowie zur Stützfläche (P), um die Anzahl von Tafeln (2) in die Bearbeitungsstation (6) zu verbringen.

## Revendications

1. Machine pour usiner des panneaux de bois (2) ou produits analogues comprenant :
- une base allongée (3) s'étendant dans une première direction (4) en ayant une surface de support (P) pour recevoir au moins un panneau (2) et définissant le poste d'usinage (6) des panneaux (2),
- un pont roulant (7) qui chevauche la base (3) dans une seconde direction (8) transversale à la première direction (4), mobile le long de la base (3) dans la première direction (4) et qui comporte au moins une tête d'usinage (9) pour couper et/ou percer les panneaux (2),
- un poste de chargement (11) pour charger les panneaux (2) à usiner et un poste de déchargement (12) pour décharger les panneaux (2) qui viennent d'être usinés et qui sont sur les côtés opposés du poste d'usinage (6) dans la première direction (4),
- le pont roulant (7) ayant au moins deux dispositifs de maintien et de transport (29) répartis le long du pont roulant (7) dans la seconde direction (8) pour être transférés par rapport au panneau (2) à usiner à partir du poste de chargement (11) jusqu'au poste d'usinage (6), et
- au moins un poussoir (28) pour transférer les panneaux (2) qui viennent d'être usinés du poste d'usinage (6) dans le poste de déchargement (12),
machine dans laquelle chaque dispositif de maintien et de transport (29) est un dispositif de serrage composé de deux mâchoires (36, 38) mobiles entre une position de serrage et une position de libération d'au moins un panneau (2), et
**caractérisée en ce que**
- le poste de chargement (11) est muni d'un premier dispositif d'approche (15) qui déplace les panneaux (2) dans la première direction (4) et d'un second dispositif d'approche (16) qui déplace les panneaux (2) dans la seconde direction (8), et
- chaque dispositif d'approche (15, 16) comporte un poussoir (20, 24) configuré pour venir en contact avec un bord latéral des panneaux (2) à transférer du poste de chargement (11) dans le poste d'usinage (6) et une fixation de copie (21, 25) configurée pour venir en contact avec une grande face du panneau supérieur (2).

2. Machine selon la revendication 1,
dans laquelle
le poste de chargement (11) comporte une plateforme de soulèvement (13) configurée pour recevoir et porter une pile de panneaux (2) et qui est mobile dans une troisième direction (10) perpendiculaire à la première et à la seconde direction (4, 8) et par rapport à la surface de support (P).

3. Machine selon la revendication 1 ou 2,
dans laquelle
le dispositif de maintien et de transport (29) est mobile dans une troisième direction (10) orthogonale à la première et à la seconde direction (4, 8) et à la surface de support (P).

4. Machine selon la revendication 3,
dans laquelle
les dispositifs de maintien et de transport (29) sont mobiles dans la troisième direction (10) en synchronisme ou indépendamment l'un de l'autre.

5. Machine selon l'une quelconque des revendications précédentes,
dans laquelle
chaque dispositif de maintien et de transport (29) est mobile autour d'un axe de rotation relative (33), qui est pratiquement parallèle à la seconde direction (8).

6. Machine selon l'une quelconque des revendications précédentes,
dans laquelle
les dispositifs de maintien et de transport (29) sont directement montés sur le pont roulant (7).

7. Machine selon l'une quelconque des revendications 1 à 5,
dans laquelle
les dispositifs de maintien et de transport (29) sont montés sur le poussoir (28).

8. Machine selon la revendication 7,
dans laquelle
le poussoir (28) est mobile par rapport au pont roulant (7) dans une troisième direction (10) qui est perpendiculaire à la première, à la seconde direction (4, 8) et à la surface de support (P), et
chaque dispositif de maintien et de transport (29) est mobile par rapport au poussoir (28) entre une position soulevée et une position abaissée et autour d'un axe de rotation relative (33) qui est parallèle à la seconde direction (8).

9. Machine selon l'une quelconque des revendications précédentes, dans laquelle
chaque dispositif d'approche (15, 16) est sélectivement mobile dans une troisième direction (10) qui est perpendiculaire à la première, à la seconde direction (4, 8) et à la surface de support (P) en fonction du nombre de panneaux (2) à déplacer dans le poste d'usinage (6).

10. Machine selon l'une quelconque des revendications précédentes, dans laquelle
le poussoir (20, 24) et la fixation de copie (21, 25) de chaque dispositif d'approche (15, 16) sont mobiles l'un par rapport à l'autre dans une troisième direction (10) qui est perpendiculaire à la première, à la seconde direction (4, 8) et à la surface de support (P) en fonction du nombre de panneaux (2) à déplacer dans le poste d'usinage (6).
